# DEMANDE DE BREVET EUROPEEN

(11) **EP 0 546 954 A1**
(43) Date de publication de la demande: **16.06.1993**
(21) Numéro de dépôt: 92403384.8
(22) Date de dépôt: 11.12.1992
(51) Int. Cl.: G02B 6/42, G02B 6/30

(54) **Procédé de montage et de couplage optique d'une fibre optique sur un substrat et substrat équipé d'une fibre optique**

(30) Priorité: 12.12.1991 FR 9115445
(71) Demandeur: FRANCE TELECOM, F-75015 Paris (FR)
(72) Inventeur: Schiltz, André, F-38330 Saint-Ismer (FR)
(74) Mandataire: Casalonga, Axel

(57) **Abrégé**

Procédé de montage d'une fibre optique (1) sur un substrat (2) et de couplage optique entre cette fibre et un élément (17) ou composant optique ou optoélectronique tel qu'un guide d'onde, un récepteur, un émetteur formé ou porté en face avant (5) par le substrat, consistant à insérer l'extrémité d'une fibre optique (1) dans un orifice traversant (6) ménagé dans le substrat (2) en l'engageant par la face arrière du substrat, à sceller l'extrémité de la fibre optique dans ledit orifice, et à réaliser sur le chemin de l'onde optique une facette de déviation (18) telle que l'onde optique provenant de la fibre optique est déviée par cette facette vers ledit élément ou composant (17), ou réciproquement.

## Description

La présente invention concerne un procédé de montage d'une fibre optique sur un substrat et de couplage optique de cette fibre.

Dans le domaine des télécommunications, la tendance actuelle est au remplacement de certaines liaisons électriques coaxiales entre appareillages électroniques par les liaisons optiques obtenues par l'intermédiaire de fibres optiques placées dans une enveloppe appropriée et interconnectant une ou plusieurs sources émettrices de lumière et un ou plusieurs photorécepteurs.

La tendance actuelle va également vers l'utilisation de fibres monomodes qui présentent un diamètre d'une dizaine de microns.

Pour effectuer le montage d'une fibre sur un substrat et son couplage optique avec un composant optoélectronique ou photorécepteur, via ou non un guide d'onde, différentes solutions sont actuellement connues.

Une première solution consiste à appliquer la partie d'extrémité de la fibre optique sur la face avant du substrat et à la maintenir par l'intermédiaire d'une plaque auxiliaire qui présente une rainure en V dans laquelle s'étend cette partie d'extrémité.

Dans une variante connue, la face d'extrémité de la fibre optique est, préalablement à son montage, biseautée, cette face d'extrémité biseautée déviant l'onde optique vers un composant optoélectronique. Dans une autre variante connue, la face d'extrémité de la fibre optique est couplée axialement à un guide d'onde formé sur le substrat.

Une autre solution connue consiste à fixer l'extrémité de la fibre optique perpendiculairement au substrat, directement sur un composant optoélectronique ou en vis-à-vis d'un tel composant au travers du substrat.

Les principaux inconvénients des solutions connues résident dans l'encombrement des dispositifs obtenus, dans la difficulté de disposer dans la position souhaitée la fibre optique qui présente une configuration déterminée avant son montage et dans l'adjonction de pièces auxiliaires pour la fixation de la fibre optique.

Le but de la présente invention est notamment de remédier au moins en partie aux inconvénients des techniques connues de montage et de couplage optique de fibres optiques sur un substrat.

Le procédé selon l'invention se rapporte au montage d'une fibre optique sur un substrat et au couplage optique entre cette fibre et un élément ou composant optique ou optoélectronique tel que guide d'onde récepteur, émetteur ou fibre optique formé ou porté en face avant sur le substrat.

Selon un objet de l'invention, le procédé consiste à insérer l'extrémité d'une fibre optique dans un orifice traversant ménagé dans le substrat en l'engageant par la face arrière du substrat, à sceller l'extrémité de la fibre optique dans ledit orifice, et à réaliser sur le chemin de l'onde optique une facette de déviation telle que l'onde optique provenant de la fibre optique est déviée par cette facette vers ledit élément ou composant, ou réciproquement.

Selon une exécution préférée de l'invention, l'extrémité de la fibre optique est disposée perpendiculairement au substrat et les axes des chemins optiques de l'onde optique sont, en amont et en aval de ladite facette de déviation perpendiculaires au substrat et parallèles à la face avant de ce dernier.

Selon un autre objet de l'invention, le procédé consiste à insérer l'extrémité d'une fibre optique dans un orifice traversant ménagé dans le substrat en l'engageant par la face arrière du substrat, à sceller l'extrémité de la fibre optique dans ledit orifice, et à déposer sur la face avant du substrat une couche de matériau qui recouvre ledit orifice et qui est destinée à former un guide d'onde et à réaliser dans ladite couche une facette de déviation telle que l'onde optique provenant de la fibre optique est déviée par cette facette vers le guide d'onde, ou réciproquement.

Selon l'invention, le procédé peut avantageusement consister à insérer l'extrémité de la fibre optique jusqu'à une position telle que sa face d'extrémité est disposée dans le plan de la face avant du substrat.

Selon un autre objet de l'invention, le procédé consiste à déposer sur la face avant du substrat une couche de matériau destinée à former un guide optique, à réaliser un orifice traversant le substrat et au moins en partie le guide d'onde, à insérer l'extrémité d'une fibre optique dans ledit orifice traversant en l'engageant dans la face arrière du substrat, à sceller l'extrémité de la fibre optique dans ledit orifice, et à réaliser sur le chemin de l'onde optique une facette de déviation telle que l'onde optique provenant de la fibre optique est déviée par cette facette vers le guide d'onde, ou réciproquement.

Selon l'invention, le procédé peut avantageusement consister à insérer l'extrémité de la fibre'optique jusqu'à une position telle que sa face d'extrémité est disposée dans le plan avant de ladite couche, ladite facette étant réalisée en bout de la fibre optique.

Selon l'invention, l'opération de scellement de l'extrémité de la fibre optique est de préférence obtenue par introduction d'une matière de scellement remplissant au moins la partie dudit orifice situé dans le voisinage de la face avant du substrat.

Selon l'invention, le procédé consiste de préférence, avant d'insérer l'extrémité de la fibre optique, à coller un film adhésif en face avant du substrat en recouvrant ledit orifice, et, après scellement de l'extrémité de la fibre optique, à enlever le film précité.

Selon l'invention, l'orifice précité est de préférence cylindrique.

Dans un forme préférée de l'invention, la fibre est de préférence disposée perpendiculairement au substrat.

Selon l'invention, l'espace annulaire séparant la paroi de la fibre optique et la paroi de l'orifice précité est de préférence compris entre 10 et 50 microns.

Selon l'invention, le procédé peut avantageusement consister à recouvrir la facette de déviation d'une couche en un matériau réfléchissant.

Selon l'invention, le procédé peut également consister à réaliser une autre facette de déviation en un autre endroit du guide d'onde, en vis-à-vis d'un composant optoélectronique inséré et scellé dans le substrat, cette autre facette étant telle que l'onde optique provenant du guide d'onde est déviée par cette autre facette vers ce composant optoélectronique, ou réciproquement.

Dans un mode de réalisation, l'opération de réalisation de la facette de déviation précitée peut être obtenue par gravure.

Selon une variante, l'opération de gravure précitée est effectuée au travers d'une couche d'un matériau photosensible déposée sur la couche précitée, dans lequel on réalise préalablement un profil adapté au profil de la facette de déviation à réaliser.

L'opération de formation de ladite facette de déviation ou dudit profil peut avantageusement être réalisée au travers d'un masque photolithographique adapté ou directement par irradiation.

L'invention a égalememt pour objet un substrat équipé d'au moins une fibre optique et présentant en face avant au moins un élément ou composant optique ou optoélectronique tel qu'un guide d'onde.

Selon l'invention, la fibre optique présente une extrémité insérée dans un orifice traversant du substrat par la face arrière de ce dernier et scellée dans cet orifice par une matière de scellement, cette extrémité de la fibre optique s'étend perpendiculairement au substrat et une facette de déviation telle que l'onde optique provenant de la fibre optique est déviée par cette facette vers le guide d'onde, ou réciproquement, est prévue dans le guide d'onde et/ou la matière de scellement et/ou est formée par la face d'extrémité de la fibre optique.

La présente invention sera mieux comprise à l'étude de différents procédés de montage de fibres optiques sur des substrats et de couplage optique de ces dernières, illustrés schématiquement, en vues fortement grossies, par le dessin sur lequel :
- les figures 1 à 3 illustrent les étapes d'un procédé selon l'invention ;
- la figure 4 illustre une variante du procédé selon l'invention ;
- la figure 5 illustre une autre variante du procédé selon l'invention ;
- les figures 6 et 7 illustrent les étapes d'un autre procédé selon l'invention ;
- et les figures 8 et 9 illustrent des variantes de substrats obtenus avec les procédés de l'invention.

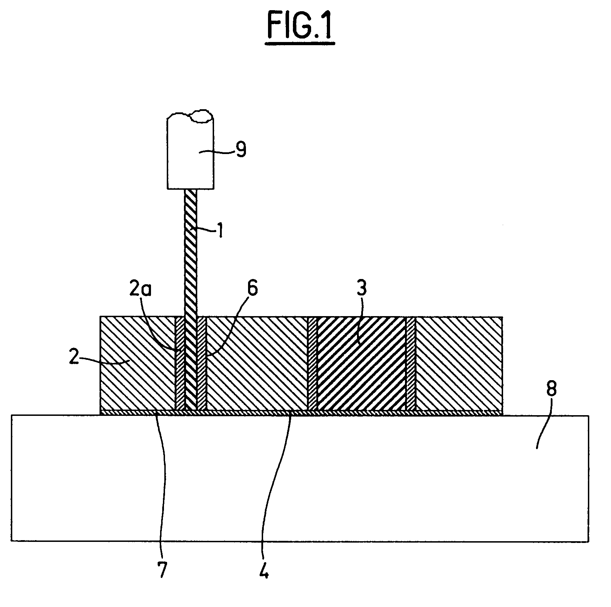

En référence aux figures 1 à 3, on va tout d'abord décrire un premier procédé de montage d'une fibre optique 1 sur un substrat 2 en forme de plaquette et de couplage optique de cette dernière avec un composant optoélectronique 3 inséré dans le substrat 2 de telle sorte que sa face avant 4 s'étende dans le même plan que la face avant 5 du substrat.

Tout d'abord, comme le montre la figure 1, on réalise un orifice traversant 6 dans le substrat 2, qui s'étend perpendiculairement à la face avant 4 du substrat 2. Dans l'exemple, cet orifice 6 est cylindrique et peut être obtenu par perçage au moyen d'un rayon laser. Dans une autre variante, cet orifice pourrait.être obtenu par gravure par définition microlithographique ou gravure KOH et présenter une forme conique selon un angle de par exemple 54°, son diamètre le plus petit étant situé du côté de la face avant 5 du substrat.

Ensuite, on colle un film adhésif 7 contre la face avant 5 du substrat 2 puis on pose et on maintient ce substrat 2 sur la face supérieure plane d'un support 8 dans une position telle que le film 7 s'étende entre le substrat 2 et ce support 8.

Ensuite, après avoir enlevé la gaine 9 entourant la partie d'extrémité de la fibre optique 1, on introduit son extrémité dans l'orifice cylindrique 6 jusqu'à ce que sa face d'extrémité soit en contact avec le film 7.

Puis, on introduit une matière de scellement 2a dans l'espace annulaire séparant l'extrémité de la fibre optique 1 et la paroi de l'orifice 6, la fibre optique 1 présentant un diamètre compris entre 5 et 100 microns et cet espace présentant de préférence une épaisseur comprise entre 10 et 50 microns. Cette matière de scellement est de préférence constituée par une colle fluide thermoréticulable ou photoréticulable, par exemple du type époxyde, polyimide ou acrylique à la fois thermostable et optiquement transparente à la longueur d'onde de l'onde optique transférée par la fibre optique 1.

Cette matière de scellement est par ailleurs de préférence constituée par une résine époxyde sans solvant, fluide et photoréticulable par un rayonnement ultrat violet selon un mode de polymérisation ionique permettant également le durcissement des zones non exposées.

Ensuite, on sépare le substrat 2 équipé de la fibre optique 1 du support 8 et on enlève par pelage le film adhésif 7. La fibre optique 1 est alors montée sur le substrat 2 et insérée dans ce dernier par sa face arrière opposée à sa face avant 5.

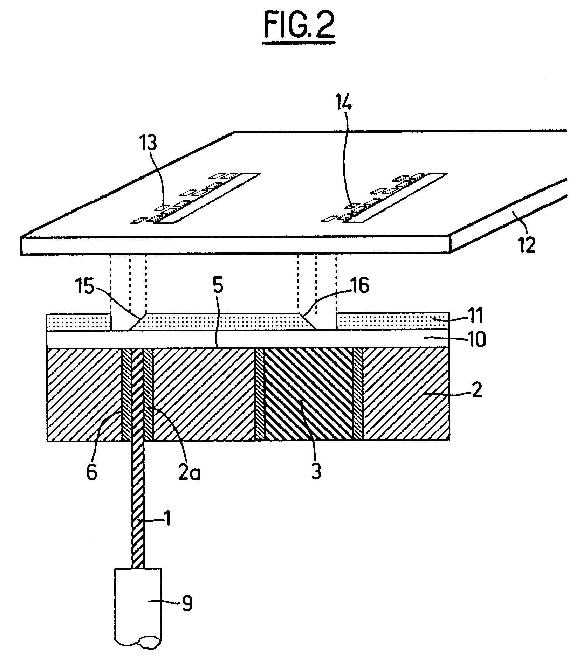

Comme le montre la figure 2, on place alors le substrat 2 de telle sorte que sa face avant 5 soit tournée vers le haut.

On dépose sur cette face avant 5 une couche 10 en un matériau destiné à former un guide d'onde optique, optiquement transparent à la longueur d'onde de l'onde optique transférée par la fibre optique 1, par exemple en un matériau diélectrique tel que de la silice ou un polymère transparent thermostable.

Le matériau utilisé pour réaliser la couche 10 peut avantageusement être identique à celui utilisé comme matière de scellement pour fixer l'extrémité de la fibre optique 1 dans l'orifice 6 du substrat 3.

Ensuite, on dépose sur la couche 10, une couche 11 de résine photosensible épaisse, du type novolaque ou polyimide photosensible. Puis, à l'aide d'un masque photolithographique 12 décrit en particulier dans le brevet français n° 85 17 487 qui comporte des motifs microniques 13 et 14 que l'on dispose en vis-à-vis de la fibre optique 1 et de la zone sensible du composant optoélectronique 3, on procède à l'insolation de la couche photosensible 11 au travers des motifs 13 et 14 du masque 12 afin de former, grâce à l'obtention d'une intensité lumineuse décroissante le long de ces motifs, des facettes inclinées 15 et 16 dans la couche photosensible 11.

Ensuite, après avoir enlevé le masque 12, on procède à la gravure de la couche 10 au travers de la couche 11 par exemple par gravure plasma.

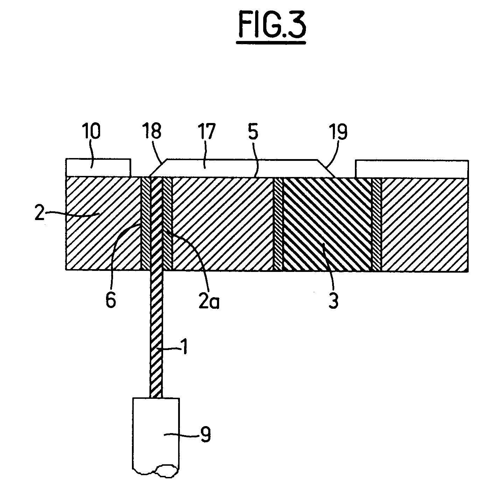

Comme le montre la figure 3, on obtient d'abord un guide d'onde 17 réalisé dans la couche 10, dont les bords peuvent avantageusement être réalisés en même temps. Ce guide d'onde 17 présente à ses extrémités, des facettes inclinées 18 et 19 situées respectivement en vis-à-vis de l'extrémité de la fibre optique 1 et de la zone sensible du composant optoélectronique 3. Ces facettes 18 et 19 sont telles que l'onde optique, provenant de la fibre optique 1 selon un axe géométrique perpendiculaire à la face avant 5 du substrat 2, est déviée par la facette de déviation 18 dans le guide d'onde 17 selon un axe géométrique parallèle à la face avant 5 du substrat 2, puis est dévié par l'autre facette de déviation 19 pour attaquer la partie sensible du composant optoélectronique 3 perpendiculairement à la face avant 5 du substrat 2, ou réciproquement. Dans l'exemple, les facettes 18 et 19 sont formées à 45° par rapport à la face avant 5 du substrat 2.

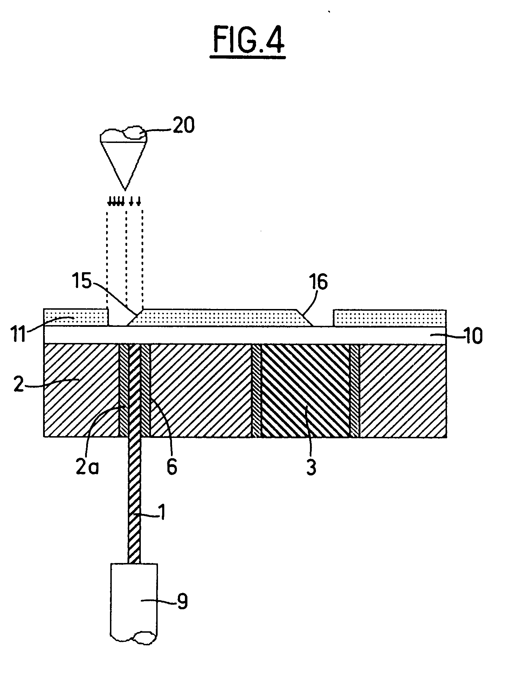

En se reportant maintenant à la figure 4, on voit qu'au lieu d'utiliser le masque spécial 12 pour la réalisation des facettes 15 et 16 dans la couche photosensible 11, on peut utiliser en variante un émetteur 20 d'un faisceau de particules, par exemple d'un faisceau d'électrons pour réaliser les facettes 15 et 16 par irradiation de la couche photosensible 11 en dosant de manière décroissante cette irradiation.

Dans une autre variante, l'émetteur 20 peut être utilisé pour éroder directement la couche 10 afin de former directement les facettes de déviaion 18 et 19 dans cette couche, aux extrémités du guide d'onde 17.

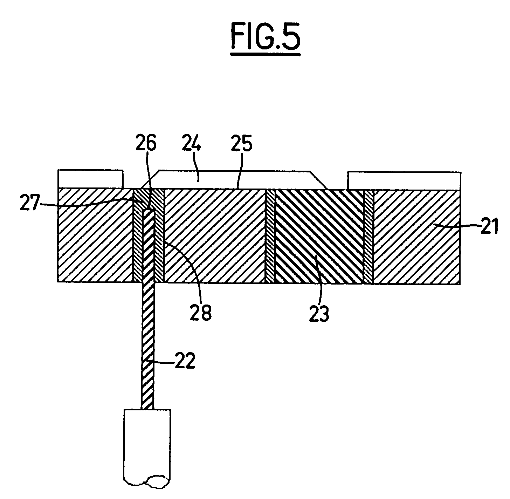

En se reportant maintenant à la figure 5, on voit qu'on a représenté un substrat 21 équipé comme précédemment d'une fibre optique 22 et d'un composant optoélectronique 23 inséré, reliés par un guide d'onde 24 formé en face avant 25 du substrat 21.

Ce substrat 21 ainsi équipé peut être réalisé en suivant les étapes du procédé décrit précédemment en référence aux figures 1 à 4 mais s'en différencie par le fait que lors de l'insertion de l'extrémité de la fibre optique 22, la face d'extrémité 26 de cette dernière n'est pas dans le plan de la face avant 25 du substrat 21 mais est légèrement en retrait et la matière de scellement 27 remplit complètement la partie avant de l'orifice 28 dans lequel la fibre optique 22 est insérée et s'étend donc entre la face avant 26 de cette fibre optique 22 et le guide d'ondes 24.

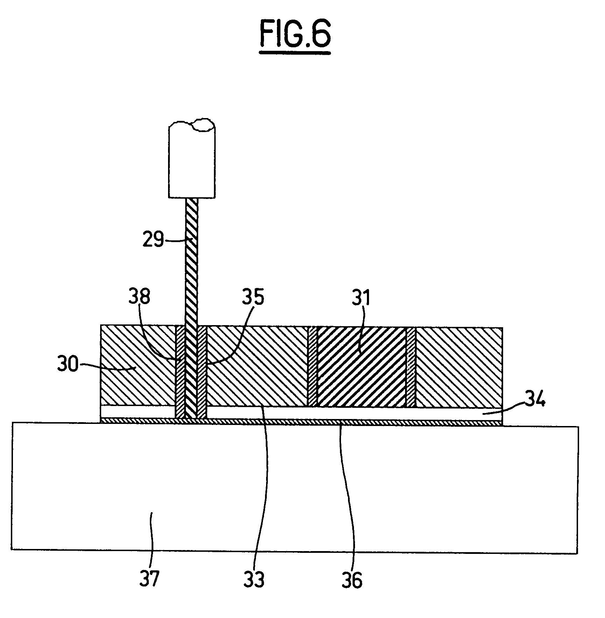

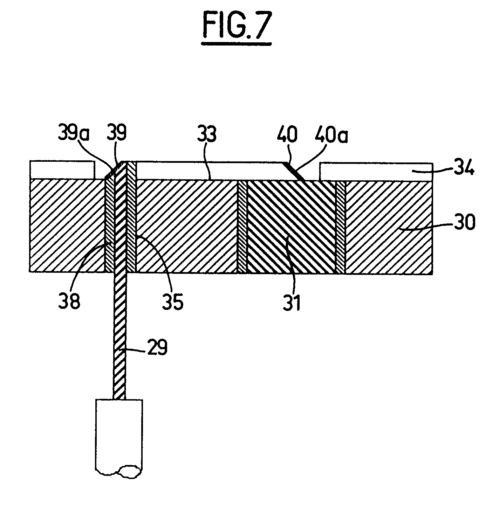

En se référant maintenant aux figures 6 et 7, on va maintenant décrire un procédé de montage d'une fibre optique 29 sur un substrat 30 et de couplage optique de cette dernière avec un composant optoélectronique 31 inséré dans ce substrat 30 de telle sorte que, comme précédemment, sa face avant 32 s'étende dans le plan de la face avant 33 du substrat 30.

Comme le montre la figure 6, cet autre procédé ne se différencie des procédés décrits précédemment que par le fait que la couche 34, destinée à constituer un guide d'onde, est déposée sur la face avant 33 du substrat 30 préalablement à l'insertion de la fibre optique 29.

En effet, le composant optoélectronique 31 étant inséré dans le substrat 30, on dépose la couche 34 sur la face avant 33 du substrat 30.

On réalise perpendiculairement à cette face avant 33 un orifice cylindrique 35 traversant le substrat 30 et la couche 34.

On colle un film adhésif 36 sur la couche 34 et on pose et maintient le substrat 30 sur un support 37, le film 36 étant en contact avec ce support 37.

On insère l'extrémité de la fibre 29 dans l'orifice 35 et on le fixe, comme précédemment, en introduisant une matière de scellement 38 dans l'espace annulaire séparant la fibre optique 29 et la paroi de l'orifice 35. On sépare le substrat 30 ainsi équipé du support 37 et on enlève par pelage le film adhésif 34.

On procède ensuite à la formation de facettes de déviation 39 et 40 pour transférer l'onde optique de la fibre optique 29 vers le composant optoélectronique 31, ou réciproquement, comme le montre la figure 7.

La réalisation de ces facettes peut être effectuée conformément aux étapes des procédés décrits précédemment. Cette fois cependant, la facette 39 est réalisée en extrémité de la fibre optique 29 si cette dernière était engagée jusqu'au plan frontal de la couche 34 ou dans la matière de scellement 38 si la face d'extrémité de la fibre optique 29 a été insérée en deçà de la face avant 33 du substrat 30.

par ailleurs, les facettes de déviation 39 et 40 peuvent être recouvertes de couches 39a et 40a en un matériau réfléchissant.

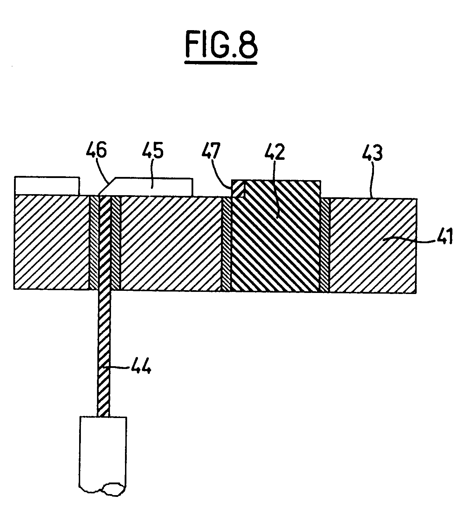

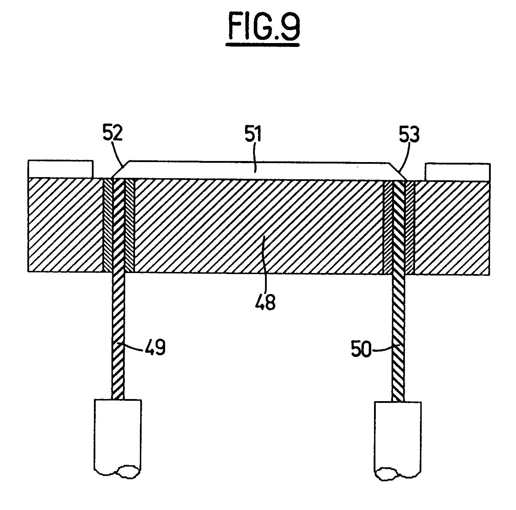

En se reportant maintenant aux figures 8 et 9, on va maintenant décrire différentes variantes de substrat équipé de fibres optiques couplées optiquement et mis en oeuvre conformément à l'un quelconque des procédés décrits précédemment.

En référence à la figure 8, on voit que le substrat 41 porte un composant optoélectronique 42 qui dépasse de la face avant 43 de ce substrat, une fibre optique 44 insérée par la face arrière du substrat 41 et un guide d'onde 45 formé sur la face avant 43 du substrat 41. Ce guide d'onde 45 présente une face de déviation inclinée 46 en vis-à-vis de la fibre optique 44 et guide les ondes optiques vers la face latérale 47 sensible du composant optoélectronique 42. Cependant, dans cet exemple, le guide d'onde 45 est interrompu avant cette face 47. Il pourrait également être interrompu à un autre endroit.

En se reportant maintenant à la figure 9, on voit qu'un substrat 48 est équipé de deux fibres optiques 49 et 50 insérées par la face arrière de ce substrat 48 et, sur sa face avant, d'un guide d'onde 51 qui présente deux facettes de déviation 52 et 53 formées en vis-à-vis des fibres optiques 49 et 50 de manière à coupler optiquement ces dernières.

La présente invention ne se limite pas aux exemples ci-dessus décrits. Bien d'autres variantes de réalisation sont possibles sans sortir du cadre défini par les revendications annexées.

## Revendications

1. Procédé de montage d'une fibre optique (1) sur un substrat (2) et de couplage optique entre cette fibre et un élément (17) ou composant optique ou optoélectronique tel qu'un guide d'onde, un récepteur, un émetteur formé ou porté en face avant (5) par le substrat, caractérisé par le fait qu'il consiste à insérer l'extrémité d'une fibre optique (1) dans un orifice traversant (6) ménagé dans le substrat (2) en l'engageant par la face arrière du substrat, à sceller l'extrémité de la fibre optique dans ledit orifice, et à réaliser sur le chemin de l'onde optique une facette de déviation (18) telle que l'onde optique provenant de la fibre optique est déviée par cette facette vers ledit élément ou composant (17), ou réciproquement.

2. Procédé selon la revendication 1, caractérisé par le fait que l'extrémité de la fibre optique (1) est disposée perpendiculairement au substrat (2) et que les axes des chemins optiques de l'onde optique sont, en amont et en aval de ladite facette de déviation (18) perpendiculaires au substrat et parallèles à la face avant (5) de ce dernier.

3. Procédé de montage d'une fibre optique (1) sur un substrat (2) et de couplage optique entre cette fibre et un élément ou composant optique ou optoélectronique tel qu'un guide d'onde, un récepteur, un émetteur formé ou porté en face avant par le substrat, caractérisé par le fait qu'il consiste à insérer l'extrémité d'une fibre optique (1) dans un orifice traversant (6) ménagé dans le substrat en l'engageant par la face arrière du substrat, à sceller l'extrémité de la fibre optique (1) dans ledit orifice, et à déposer sur la face avant du substrat une couche (11) de matériau qui recouvre ledit orifice et qui est destinée à former un guide d'onde (17) et à réaliser dans ladite couche une facette de déviation (18) telle que l'onde optique provenant de la fibre optique est déviée par cette facette vers le guide d'onde, ou réciproquement.

4. Procédé selon la revendication 2, caractérisé par le fait qu'il consiste à insérer l'extrémité de la fibre optique (1) jusqu'à une position telle que sa face d'extrémité est disposée dans le plan de la face avant (5) du substrat (2).

5. Procédé de montage d'une fibre optique (29) sur un substrat (30) et de couplage optique entre cette fibre et un élément ou composant optique ou optoélectronique tel qu'un guide d'onde, un récepteur, un émetteur formé ou porté en face avant par le substrat, caractérisé par le fait qu'il consiste à déposer sur la face avant (33) du substrat une couche (34) de matériau destinée à former un guide optique, à réaliser un orifice (35) traversant le substrat et au moins en partie le guide d'onde, à insérer l'extrémité d'une fibre optique (29) dans ledit orifice traversant (35) en l'engageant dans la face arrière du substrat, à sceller l'extrémité de la fibre optique dans ledit orifice, et à réaliser sur le chemin de l'onde optique une facette de déviation (39) telle que l'onde optique provenant de la fibre optique est déviée par cette facette vers le guide d'onde, ou réciproquement.

6. Procédé selon la revendication 4, caractérisé par le fait qu'il consiste à insérer l'extrémité de la fibre optique (29) jusqu'à une position telle que sa face d'extrémité est disposée dans le plan avant de ladite couche (34), ladite facette (34) étant réalisée en bout de la fibre optique (29).

7. Procédé selon l'une quelconque des revendications précédentes caractérisé par le fait que l'opération de scellement de l'extrémité de la fibre optique (1) est obtenue par introduction d'une matière de scellement (2a) remplissant au moins la partie dudit orifice (6) située dans le voisinage de la face avant (5) du substrat.

8. Procédé selon l'une quelconque des revendications précédentes, caractérisé par le fait qu'il consiste, avant d'insérer l'extrémité de la fibre optique, à coller un film adhésif (7) en face avant du substrat en recouvrant ledit orifice (6), et, après scellement de l'extrémité de la fibre optique, à enlever le film précité.

9. Procédé selon l'une quelconque des revendications précédentes, caractérisé par le fait que l'orifice précité (6) est cylindrique.

10. Procédé selon l'une quelconque des revendications précédentes, caractérisé par le fait que la fibre optique (1) est disposée perpendiculairement au substrat.

11. Procédé selon l'une quelconque des revendications précédentes, caractérisé par le fait que l'espace annulaire séparant la paroi de la fibre optique et la paroi de l'orifice précité est compris entre 10 et 50 microns.

12. Procédé selon l'une quelconque des revendications précédentes caractérisé par le fait qu'il consiste à recouvrir la facette de déviation (39) d'une couche (39a) en un matériau réfléchissant.

13. Procédé selon l'une quelconque des revendications précédentes, caractérisé par la fait qu'il consiste à réaliser une autre facette de déviation (19) en un autre endroit du guide d'onde, en vis-à-vis d'un composant optoélectronique (3) inséré et scellé dans le substrat, cette autre facette étant telle que l'onde optique provenant du guide d'onde et déviée par cette autre facette vers ce composant optoélectronique, ou réciproquement.

14. Procédé selon l'une quelconque des revendications précédentes, caractérisé par le fait que l'opération de réalisation de la facette de déviation précitée est obtenue par gravure.

15. Procédé selon la revendication 14, caractérisé par le fait que l'opération de gravure précitée est effectuée au travers d'une couche (11) d'un matériau photosensible déposée sur la couche (10) précitée, dans lequel on réalise préalablement un profil (15) adapté au profil de la facette de déviation (18) à réaliser.

16. Procédé selon l'une des revendications 14 et 15, caractérisée par le fait que l'opération de formation de ladite facette de déviation ou dudit profil est réalisée directement par irradiation (20).

17. Procédé selon l'une des revendications 14 et 15, caractérisé par le fait que l'opération de formation de ladite facette de déviation ou dudit profil est réalisée au travers d'un masque photolithographique (12).

18. Substrat équipé d'au moins une fibre optique et présentant en face avant au moins un guide d'onde, caractérisé par le fait que la fibre optique (1) présente une extrémité insérée dans un orifice traversant (6) du substrat par la face arrière de ce dernier et scellée dans cet orifice par une matière de scellement (2a), que cette extrémité de la fibre optique (1) s'étend perpendiculairement au substrat et qu'une facette de déviation (18) telle que l'onde optique provenant de la fibre optique est déviée par cette facette vers le guide d'onde parallèlement à la face avant (5) du substrat, ou réciproquement, est prévue dans le guide d'onde et/ou la matière de scellement et/ou est formée par la face d'extrémité de la fibre optique.
